# EUROPÄISCHE PATENTSCHRIFT

(11) **EP 2 287 049 B1**
(45) Veröffentlichungstag und Bekanntmachung des Hinweises auf die Patenterteilung: **17.04.2013**
(21) Anmeldenummer: 10172612.3
(22) Anmeldetag: 12.08.2010
(51) Int. Cl.: B60R 22/26, B60R 22/20

(54) **Fahrzeugsitz mit höhenverstellbarem Sicherheitsgurt**
Vehicle seat with height-adjustable seat belt
Siège de véhicule doté d'une ceinture de sécurité réglable en hauteur

(30) Priorität: 20.08.2009 DE 102009037994
(43) Veröffentlichungstag der Anmeldung: 23.02.2011
(73) Patentinhaber: GRAMMER AG, 92224 Amberg (DE)
(72) Erfinder: Ott, Richard, 92245 Kümmersbruck (DE); Haner, Markus, 92665 Altenstadt (DE); Pöhlmann, Andreas, 92242 Hirschau (DE)
(74) Vertreter: Hannke, Christian

(56) Entgegenhaltungen:
- DE-A1- 3 426 207
- DE-B3-102007 047 031
- GB-A- 2 367 040
- US-A- 5 658 048

## Beschreibung

Die Erfindung betrifft einen Fahrzeugsitz mit höhenverstellbarem Sicherheitsgurt.

DE 34 06 047 C2 zeigt einen höhenverstellbaren End- oder Umlenkbeschlag für einen Sicherheitsgurt in Kraftfahrzeugen mit einem Beschlagteil, das in einer diesem als Widerlager dienenden, am Fahrzeug befestigten Führungsschiene verschiebbar geführt ist.

EP 0 320 739 B1 offenbart eine Vorrichtung zum Verstellen eines Gurtumlenkbeschlages für einen Sicherheitsgurt, bei welcher die Gurtanlageverhältnisse im Hinblick auf eine Verbesserung der Sicherheitsgurtwirkung an die Körpergröße des Gurtträgers angepasst werden.

Die in diesen Dokumenten beschriebenen Sicherheitsgurte sind jeweils an der B-Säule des Fahrzeugs befestigt. Eine solche Befestigung des Sicherheitsgurts ist insbesondere bei Fahrzeugen, bei denen ein größerer Abstand zwischen dem Fahrzeugsitz und einer Längssäule des Fahrzeugs vorhanden ist, beispielsweise bei Lastkraftfahrzeugen oder auch bei in der Mitte des Fahrzeugs angeordneten Fahrzeugsitzen, für den Sicherheitsgurt benutzenden Insassen nicht sehr komfortabel. Zudem ist eine solche Befestigung bei Sportsitzen unüblich.

Daher wurden Fahrzeugsitze mit integrierten Sicherheitsgurten konzipiert, wie beispielsweise in der DE 103 02 942 A1 oder der DE 197 17 666 A1 beschrieben. Die in diesen Dokumenten beschriebenen Sicherheitsgurte sind jedoch nicht höhenverstellbar und sind somit nicht auf verschiedene Körpergrößen der den Sicherheitsgurt benutzenden Fahrzeuginsassen anpassbar. Dadurch entsteht nicht nur eine Verminderung des Sitzkomforts auf den Fahrzeugsitzen mit integrierten Sicherheitsgurten sondern gegebenenfalls ein Sicherheitsrisiko, wenn der Sicherheitsgurt nicht an die Körpergröße des den Sicherheitsgurt benutzenden Fahrzeuginsassen angepasst ist.

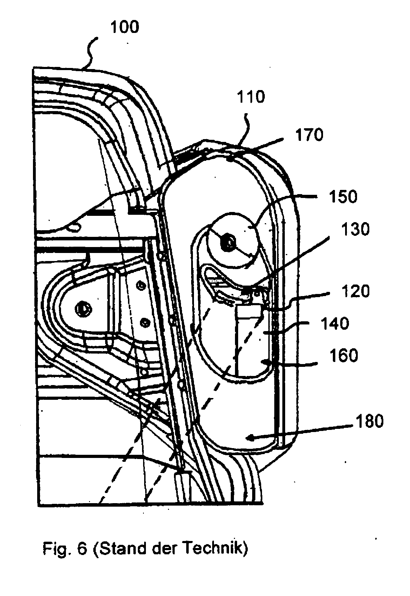

Fig. 6 zeigt einen Teil eines Fahrzeugsitzes 100 mit einem Fahrzeugsitzabschnitt 110 zur Aufnahme eines höhenverstellbaren Sicherheitsgurts 120 gemäß dem Stand der Technik. Der Sicherheitsgurt 120 ist in dem Fahrzeugsitzabschnitt 110 auf einer nicht dargestellten Rolle aufgerollt, die unter einer ersten Öffnung 130 angeordnet ist. Die erste Öffnung 130 dient zum Durchführen eines Endes des Sicherheitsgurts 120 aus dem Fahrzeugsitzabschnitt 110 nach außen auf den Fahrzeugsitz 100. Die erste Öffnung 130 ist in einer Abdeckung 140 angeordnet, an welcher ein Griff 150 befestigt ist, mittels welchem die Abdeckung 140, und damit auch die erste Öffnung 130, gegenüber dem Fahrzeugsitzabschnitt 110 im Wesentlichen vertikal nach oben und unten bewegt werden kann. In Fig. 6 ist diese Bewegung als Pfeil dargestellt.

Die Abdeckung 140 dient zum Abdecken einer zweiten Öffnung 160 in dem Fahrzeugsitzabschnitt 110. Daher ist die Abdeckung 140 derart bemessen, dass die Abdeckung 140 sowohl in der oberen Stellung des Griffes 150 in der zweiten Öffnung 160 als auch der unteren Stellung des Griffes 150 in der zweiten Öffnung 160 immer die zweite Öffnung 160 abdeckt. Aus diesem Grund muss der Fahrzeugsitzabschnitt 110 sowohl einen sich über der zweiten Öffnung 160 befindenden Freiraum 170 als auch einen sich unter der zweiten Öffnung 160 befindenden Freiraum 180 aufweisen. Demzufolge ist der Fahrzeugsitzabschnitt 110 wesentlich größer zu bemessen als der Abstand, der zwischen der oberen und unteren Stellung des Griffes 150 realisiert ist und die maximal mögliche Höhenverstellung des Sicherheitsgurtes 120 angibt. Das heißt, ein solcher höhenverstellbarer Sicherheitsgurt 120 hat einen vergleichsweise großen Platzbedarf. Dies ist insbesondere bei kompakt zu bauenden Fahrzeugsitzen 100 nachteilig.

Zudem besteht das Problem, dass bei kompakter werdender Bauweise eines höhenverstellbaren Sicherheitsgurts an einem Fahrzeugsitz, die Handhabung und Wartungsfreundlichkeit des höhenverstellbaren Sicherheitsgurts herabgesetzt sein kann.

Aus der DE 34 26 207, welche den nächstliegenden Stand der Technik zeigt, ist ein Fahrzeugsitz bekannt mit einem höhenverstellbaren Sicherheitsgurt und mit einem Fahrzeugsitzabschnitt zur Aufnahme eines ersten Endes des Sicherheitsgurts, wobei der Fahrzeugsitzabschnitt eine Wandung aufweist, die den Fahrzeugsitzabschnitt zum Fahrzeugsitz hin abschließt und hinter welcher eine erste Schlitzöffnung zur Durchführung des Sicherheitsgurts aus dem Inneren des Fahrzeugsitzabschnitts zu dem Äusseren des Fahrzeugsitzabschnitts angeordnet ist.

Daher ist es Aufgabe der Erfindung, einen Fahrzeugsitz mit daran befestigtem höhenverstellbaren Sicherheitsgurt zur Verfügung zu stellen, bei welchem sowohl der Sitzkomfort und die Fahrsicherheit eines auf dem Fahrzeugsitz sitzenden Fahrzeuginsassen unabhängig von seiner Körpergröße verbessert ist als auch der Platzbedarf für den Höhenverstellmechanismus verringert ist wobei gleichzeitig die Handhabung und Wartungsfreundlichkeit des höhenverstellbaren Sicherheitsgurts verbessert ist.

Die Aufgabe wird durch einen Fahrzeugsitz mit höhenverstellbarem Sicherheitsgurt nach Patentanspruch 1 gelöst. Hierbei dient der Sicherheitsgurt zur Sicherung eines Benutzers des Fahrzeugsitzes und der Fahrzeugsitz umfasst einen Fahrzeugsitzabschnitt zur Aufnahme eines ersten Endes des Sicherheitsgurts. Der Fahrzeugsitzabschnitt umfasst eine Blende, die den Fahrzeugsitzabschnitt zum Fahrzeugsitz hin abschließt, und hinter welcher eine erste Schlitzöffnung zur Durchführung des Sicherheitsgurts aus dem Inneren des Fahrzeugsitzabschnitts zu dem Äußeren des Fahrzeugsitzabschnitts angeordnet ist, und eine zweite Schlitzöffnung zur Führung eines Sicherheitsgurt-Höhenverstellungselements auf dem Fahrzeugsitzabschnitt zwischen einer oberen Endstellung des Sicherheitsgurts und einer unteren Endstellung des Sicherheitsgurts. Die Blende fällt zu einer Außenkante des Fahrzeugsitzes hin schräg nach unten ab, bei welcher der Fahrzeugsitzabschnitt vorhanden ist.

Vorteilhafte Ausgestaltungen des Fahrzeugsitzes sind in den abhängigen Patentansprüchen angegeben.

Es ist von Vorteil, wenn die erste Schlitzöffnung schräg zu der zweiten Schlitzöffnung angeordnet ist.

Erfindungsgemäß ist eine Ebene, in welcher die Öffnung der ersten Schlitzöffnung 22 angeordnet ist, senkrecht zu einer Ebene, in welcher sich der Fahrzeugsitzabschnitt 20 erstreckt.

Ferner ist es möglich, dass der Sicherheitsgurt schräg zu der Außenkante des Fahrzeugsitzes aus der ersten Schlitzöffnung herausgeführt ist.

Vorzugsweise hat der Fahrzeugsitzabschnitt zudem ein mit dem Sicherheitsgurt-Höhenverstellungselement verbundenes Schwenkelement zum Schwenken eines von dem Schwenkelement zu dem zweiten Ende des Sicherheitsgurts führenden Teils des Sicherheitsgurts um eine zur Schlitzlänge der zweiten Schlitzöffnung senkrechte Schwenkachse. Hierbei kann das Schwenkelement eine Schwenkelementöffnung aufweisen, durch welche der Sicherheitsgurt geführt ist und welche ein gerade geformtes Öffnungselement hat, über welches der Sicherheitsgurt gleiten kann. Hierbei kann das Schwenkelement an dem Sicherheitsgurt-Höhenverstellungselement mittels der Schwenkachse schwenkbar gelagert sein, die von dem gerade geformten Öffnungselement beabstandet und senkrecht zu diesem angeordnet ist.

Es ist auch vorteilhaft, wenn das Schwenkelement eine zu der Schwenkachse achssymmetrische Form hat.

Das Schwenkelement kann zudem um bis zu 180° um die Schwenkachse schwenkbar sein.

Vorzugsweise ist das Sicherheitsgurt-Höhenverstellungselement an einem Schiebeelement befestigt, welches breiter als die Schlitzbreite der zweiten Schlitzöffnung ist und zum Schieben des Sicherheitsgurt-Höhenverstellungselements entlang der zweiten Schlitzöffnung dient. Hierbei kann das Sicherheitsgurt-Höhenverstellungselement an der Schwenkachse des Schwenkelements an dem Schiebeelement befestigt sein.

Es besteht auch die Möglichkeit, dass das Sicherheitsgurt-Höhenverstellungselement außen an dem Fahrzeugsitzabschnitt und das Schiebeelement innen in dem Fahrzeugsitzabschnitt geführt sind.

Es ist auch von Vorteil, wenn die obere Endstellung des Sicherheitsgurts und die untere Endstellung des Sicherheitsgurts um 40 bis 80 mm voneinander beabstandet sind.

Durch die zuvor beschriebene spezielle Ausgestaltung des Fahrzeugsitzes kann eine komfortable Höhenverstellung des an ihm vorhandenen Sicherheitsgurts erzielt werden, so dass der Sicherheitsgurt für mehrere Benutzer des Fahrzeugsitzes bzw. Fahrzeuginsassen, die eine unterschiedliche Körpergröße haben, komfortabel getragen bzw. benutzt werden kann. Dadurch kann auch die Fahrsicherheit eines auf dem Fahrzeugsitz sitzenden Fahrzeuginsassen unabhängig von seiner Körpergröße verbessert werden, da der Sicherheitsgurt individuell an den einzelnen Benutzer des Fahrzeugsitzes bzw. Fahrzeuginsassen angepasst werden kann.

Zudem kann mittels der Schrägstellung der Blende der Vorteil erzielt werden, dass der oberste Punkt der Blende praktisch als Anschlag für die untere Endstellung des Sicherheitsgurts dienen kann und der Sicherheitsgurt trotzdem auf der anderen Seite des Sicherheitsgurts durch die Schrägstellung der Blende noch für eine menschliche Hand frei zugänglich ist. Auf diese Weise kann die Höhenverstellung des Sicherheitsgurts sehr platzsparend realisiert werden und trotzdem die Handhabung und Wartungsfreundlichkeit des höhenverstellbaren Sicherheitsgurts verbessert werden.

Darüber hinaus kann durch die Schrägstellung des Sicherheitsgurtes in der ersten Schlitzöffnung eine bessere Ausrichtung des Sicherheitsgurts zu dem Benutzer des Fahrzeugsitzes erreicht werden. Folglich ist der Sicherheitsgurt gemäß einer solchen Modifikation noch ergonomischer für den Benutzer des Fahrzeugsitzes angeordnet.

Nachfolgend wird die Erfindung unter Bezugnahme auf die beiliegende Zeichnung und anhand von Ausführungsbeispielen näher beschrieben. Es zeigen:
- Fig. 1: eine Ansicht eines Fahrzeugsitzes mit einem höhenverstellbaren Sicherheitsgurt gemäß einem Ausführungsbeispiel der vorliegenden Erfindung;
- Fig. 2: eine schematische dreidimensionale Ansicht eines Fahrzeugsitzabschnitts des in Fig. 1 gezeigten Fahrzeugsitzes, bei welchem sich der Sicherheitsgurt in der obe- ren Höhenstellung befindet;
- Fig. 3: eine schematische dreidimensionale Ansicht eines Fahrzeugsitzabschnitts des in Fig. 1 gezeigten Fahrzeugsitzes, bei welchem sich der Sicherheitsgurt in der unte- ren Höhenstellung befindet;
- Fig. 4: eine schematische Draufsicht auf einen Teil des Fahrzeugsitzabschnitts, bei wel- chem die Anordnung des Sicherheitsgurts zur Veranschaulichung sowohl in der unteren als auch der oberen Höhenstellung dargestellt ist;
- Fig. 5: eine schematische Querschnittsansicht des in Fig. 4 gezeigten Fahrzeugsitzab- schnitts;
- Fig. 6: eine Draufsicht auf einen Fahrzeugsitzabschnitt mit höhenverstellbarem Sicher- heitsgurt gemäß dem Stand der Technik.

### (Ausführungsbeispiel)

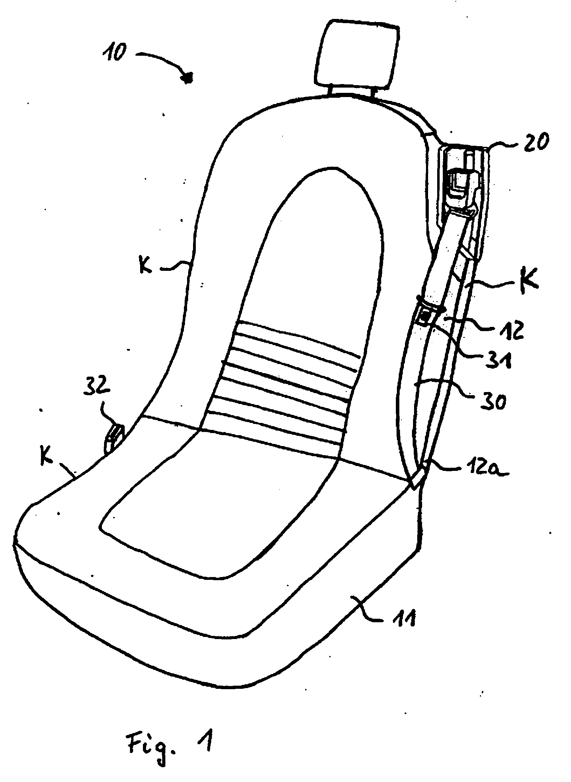

Wie aus Fig. 1 ersichtlich, hat ein Fahrzeugsitz 10 einen Sitz 11 und eine Rückenlehne 12, an der sich im oberen Bereich seitlich ein Fahrzeugsitzabschnitt 20 befindet. Der Sitz 11 und die Rückenlehne 12 sind gepolstert, um den Sitzkomfort auf dem Sitz für einen Benutzer des Fahrzeugsitzes 10 zu erhöhen.

An dem Fahrzeugsitzabschnitt 20 ist ein Sicherheitsgurt 30 mit seinem ersten Ende befestigt, das in Fig. 1 nicht sichtbar ist. Das zweite Ende des Sicherheitsgurts 30 ist dagegen im unteren Bereich 12a der Rückenlehne 12 auf der gleichen Seite der Rückenlehne 12 wie der Fahrzeugsitzabschnitt 20 befestigt. Das zweite Ende des Sicherheitsgurts 30 kann auch an dem Sitz 11 oder an dem Boden des Fahrzeugs montiert sein, in welchem der Fahrzeugsitz 10 montiert ist. Zwischen den beiden Enden des Sicherheitsgurts 30 ist der Sicherheitsgurt 30 auf einer in Fig. 1 nicht gezeigten Rolle aufgerollt. Daher kann der Sicherheitsgurt 30 durch Abrollen der Rolle verlängert werden. Dies ist insbesondere notwendig, damit eine Sicherheitsgurtsteckeinrichtung 31, die an dem Sicherheitsgurt 30 zwischen seinem ersten und zweiten Ende vorzugsweise verschiebbar angebracht ist, durch Ausziehen des Sicherheitsgurts 30 von einem seiner Befestigungspunkte in eine Sicherheitsgurtsteckbuchse 32 an der anderen Seite des Fahrzeugsitzes 10, beispielsweise neben einer Außenkante K des Fahrzeugsitzes 10, eingesteckt werden kann. Auf diese Weise kann sich ein Benutzer des Fahrzeugsitzes 10, also ein Fahrzeuginsasse, an dem Fahrzeugsitz 10 festgurten.

Die Rolle zum Aufrollen des Sicherheitsgurts 30 kann entweder nah an dem ersten Ende oder nah an dem zweiten Ende des Sicherheitsgurts 30 angeordnet sein. Das heißt, die Rolle kann beispielsweise in dem Fahrzeugsitzabschnitt 20 oder im unteren Bereich 12a der Rückenlehne 12 angeordnet sein.

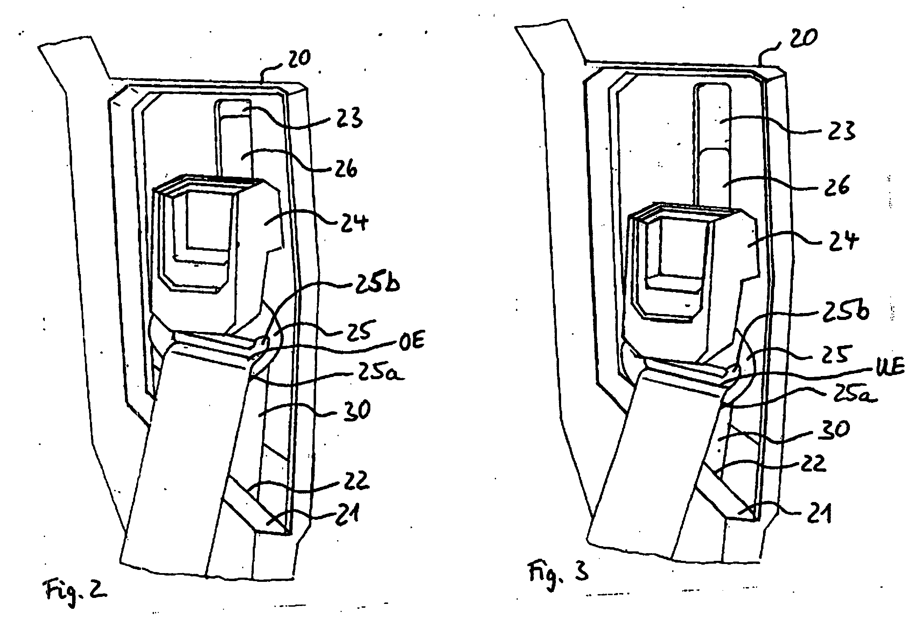

In Fig. 2 ist ein Detail des Fahrzeugsitzabschnitts 20 von Fig. 1 gezeigt. Wie aus Fig. 2 zu entnehmen, hat der Fahrzeugsitzabschnitt 20 eine Blende 21, hinter der eine erste Schlitzöffnung 22 angeordnet ist. Zudem hat der Fahrzeugsitzabschnitt 20 eine zweite Schlitzöffnung 23, ein Sicherheitsgurt-Höhenverstellelement 24, ein Schwenkelement 25 und eine Abdeckung der zweiten Schlitzöffnung 23, die nachfolgend als Schiebeelement 26 bezeichnet ist.

Die Blende 21 ist auf den Fahrzeugsitzabschnitt 20 aufgesetzt und schließt ihn zum Fahrzeugsitz 10 hin bzw. nach vorne zur Rückenlehne 12 des Fahrzeugsitzes 10 hin ab. Auf diese Weise ist der Fahrzeugsitzabschnitt 20 gegenüber der Rückenlehne 12 des Fahrzeugsitzes etwas dünner ausgeführt, das heißt so viel dünner, wie die Stärke der Blende 21 gewählt ist. Hierbei sind die Blende 21 und der Fahrzeugsitzabschnitt 20 derart ausgeführt, dass im unteren Bereich der Blende 21 zwischen dem Fahrzeugsitzabschnitt 20 und der Blende 21 die erste Schlitzöffnung 22 gebildet ist. Die erste Schlitzöffnung 22 hat eine Schlitzbreite, die der Gurtstärke des Sicherheitsgurts 30 entspricht, und eine Schlitzlänge, die der Gurtbreite des Sicherheitsgurts 30 entspricht. Das heißt, die erste Schlitzöffnung 22 ist so breit und so lang, dass der Sicherheitsgurt 30 durch sie hindurch gezogen werden kann. Demzufolge ist die Schlitzlänge der ersten Schlitzöffnung 22 etwas länger als der Sicherheitsgurt 30 breit ist und die Schlitzbreite der ersten Schlitzöffnung 22 etwas breiter als die Gurtstärke des Sicherheitsgurts 30.

Durch die genannte Anordnung der Blende 21, des Fahrzeugsitzabschnitts 20 und der ersten Schlitzöffnung 22 ist eine Ebene, in welcher die Öffnung der ersten Schlitzöffnung 22 angeordnet ist, senkrecht zu einer Ebene, in welcher sich der Fahrzeugsitzabschnitt 20 erstreckt, und auf welche die Blende 21 aufgesetzt ist.

Das heißt, die Blende 21, und damit auch die erste Schlitzöffnung 22, ist zu einer der Außenkanten K des Fahrzeugsitzes 10 geneigt. Genauer gesagt, die erste Schlitzöffnung 21 liegt an einer Linie, die schräg nach unten zu der Außenkante K des Fahrzeugsitzes 10 bzw. des Fahrzeugsitzabschnitts 20 läuft, bei welcher auch der Fahrzeugsitzabschnitt 20 an dem Fahrzeugsitz 10 angeordnet ist. Durch die erste Schlitzöffnung 22 ist der Sicherheitsgurt 30 derart geführt, dass er von seinem Befestigungspunkt an seinem ersten Ende, dass innerhalb des Fahrzeugsitzabschnitts 20 unter der ersten Schlitzöffnung 22 liegt und daher nicht sichtbar ist, nach außen auf den Fahrzeugsitzabschnitt 20 geführt ist.

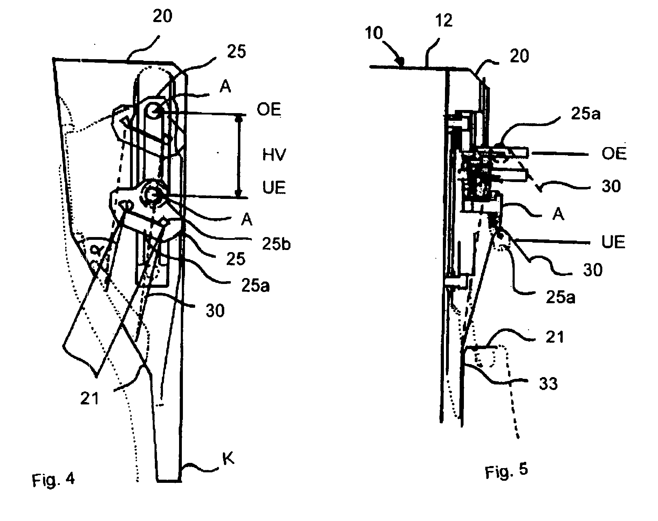

Der Sicherheitsgurt 30 ist darüber hinaus durch das Schwenkelement 25 geführt. Hierzu kann das Schwenkelement 25 annähernd die Form eines ovalen Gurtrings haben, der an einer Längsseite des Ovals eine Ausbuchtung aufweist, bei welcher das Schwenkelement 25 an seiner Schwenkachse A befestigt ist. Die Schwenkachse A ist in Fig. 4 und Fig. 5 näher dargestellt.

Wie in Fig. 2 gezeigt, ist der Sicherheitsgurt 30 durch den ovalen Gurtring geführt und um einen zumindest abschnittsweise geraden Gurtringabschnitt 25a gelegt, über den der Sicherheitsgurt 30 gleiten kann. Das heißt, das Schwenkelement 25 hat eine Schwenkelementöffnung 25b, durch welche der Sicherheitsgurt 30 geführt ist und welche ein zumindest abschnittsweise gerade geformtes Öffnungselement 25a, bzw. den Gurtringabschnitt 25a, hat, über welches/n der Sicherheitsgurt 30 gleiten kann

Das Schwenkelement 25 ist an einer in Fig. 2 nicht sichtbaren Schwenkachse A mit dem Sicherheitsgurt-Höhenverstellungselement 24 verbunden, so dass das Schwenkelement 25 um diese Schwenkachse A geschwenkt werden kann, was später noch genauer beschrieben ist.

Die Schwenkachse A ist in der zweiten Schlitzöffnung 23 verschiebbar gelagert. Die zweite Schlitzöffnung 23 ist in dem Fahrzeugsitzabschnitt 20 in Bezug auf die Rückenlehne 12 im Wesentlichen vertikal angeordnet. Genauer gesagt, ist die zweite Schlitzöffnung 23 eine Führungsschiene, in welcher das Sicherheitsgurt-Höhenverstellungselement 24 derart geführt wird, dass es nach oben und unten in Bezug auf die Rückenlehne 12 des Fahrzeugsitzes 10 verschiebbar ist. Fig. 2 zeigt hierbei eine obere Endstellung OE und Fig. 3 eine untere Endstellung UE. Das heißt, das Sicherheitsgurt-Höhenverstellungselement 24 kann in oder entlang der zweiten Schlitzöffnung 23 zwischen einer unteren Endstellung UE und einer oberen Endstellung OE verschoben werden.

Hierzu ist das Sicherheitsgurt-Höhenverstellungselement 24 durch die zweite Schlitzöffnung 23 hindurch an dem Schiebeelement 26 befestigt. Das Schiebeelement 26 ist also hinter der zweiten Schlitzöffnung 23 in dem Fahrzeugsitzabschnitt 20 angeordnet. Das Schiebeelement 26 ist derart größer als die zweite Schlitzöffnung 23 bemessen, dass es die zweite Schlitzöffnung 23 zumindest seitlich vollständig oder auch nur teilweise abdeckt. Zudem ist das Schiebeelement 26 vorzugsweise auch derart groß bemessen, dass es die zweite Schlitzöffnung 23 nach oben hin abdeckt, wenn das Sicherheitsgurt-Höhenverstellungselement 24 in die obere Endstellung OE geschoben bzw. angeordnet ist. Auf diese Weise kann das Schiebeelement zusammen mit dem oberen Ende des Fahrzeugsitzabschnitt 20 gleichzeitig auch als Anschlag für die obere Endstellung OE dienen.

Demgegenüber bedeckt das Schiebeelement 26 die zweite Schlitzöffnung 23 nur teilweise, wenn das Sicherheitsgurt-Höhenverstellungselement 24 in die untere Endstellung OE geschoben bzw. angeordnet ist. Um jedoch eine Verschmutzung des Inneren des Fahrzeugsitzabschnitt 20 zu vermeiden, kann hinter der zweiten Schlitzöffnung 23 in dem Fahrzeugsitzabschnitt 20 eine hier nicht dargestellte Abdeckung vorhanden sein, welche die zweite Schlitzöffnung 23 zu dem Inneren des Fahrzeugsitzabschnitts 20 abdeckt, jedoch gleichzeitig so weit über der zweiten Schlitzöffnung 23 angeordnet ist, dass ein Verschieben des Sicherheitsgurt-Höhenverstellungselements 24 in der zweiten Schlitzöffnung 23 zusammen mit dem Schiebeelement 26 problemlos möglich ist.

Hieraus ergibt sich, dass bei der erfindungsgemäßen Höhenverstellung des Sicherheitsgurts 30 an dem Fahrzeugsitz 10 des Ausführungsbeispiels ein geringerer Platzbedarf für die Höhenverstellung des Sicherheitsgurts 30 als bei dem in Fig. 6 gezeigten Stand der Technik erforderlich ist, da kein Freiraum für das Schiebeelement unter dem Sicherheitsgurt-Höhenverstellungselement 24 benötigt wird, wie bei dem in Fig. 6 gezeigten Stand der Technik.

Das Sicherheitsgurt-Höhenverstellungselement 24 kann in der zweiten Schlitzöffnung 23 stufenlos oder auch mittels mehreren Stufen in der Höhe verstellt werden. Hierzu kann beispielsweise die zweite Schlitzöffnung 23 mit verschiedenen Raststufen versehen sein, in die ein Rastelement des Sicherheitsgurt-Höhenverstellungselements 24 einrasten kann. Es können jedoch auch die Abdeckung hinter (von der Zeichenebene von Fig. 2 und Fig. 3 aus gesehen) dem Schiebeelement 26 und das Schiebeelement 26 mit mehreren Raststufen und darin einrastbarem Rastelement ausgestattet sein. Zudem ist es möglich, dass ein Rastelement des Sicherheitsgurt-Höhenverstellungselements 24 durch das Schiebelement 26 hindurch ragt und somit in Raststufen der Abdeckung hinter dem Schiebeelement 26 einrasten kann.

In Fig. 4 und Fig. 5 ist das Schwenkelement 25 zur besseren Veranschaulichung sowohl an der unteren Endstellung UE als auch der oberen Endstellung OE dargestellt. Der Sicherheitsgurt 30 für das in der oberen Endstellung OE gezeigte Schwenkelement 25 ist in Fig. 4 und Fig. 5 jeweils mit einer gestrichelten Linie dargestellt.

Der Abstand zwischen der unteren Endstellung UE und der oberen Endstellung OE bzw. die Höhenverstellung HV ist abhängig von dem Platz, der für die zweite Schlitzöffnung 23 an der Rückenlehne 12 zur Verfügung steht. Je nach Gestaltung des Fahrzeugsitzes 10 kann die Größe der Höhenverstellung HV zwischen der unteren Endstellung UE und der oberen Endstellung OE relativ frei gewählt werden. Beispielsweise kann die Höhenverstellung HV ca. 60 mm betragen. Vorzugsweise beträgt die Höhenverstellung HV ca. 40 bis 80 mm.

Gemäß Fig. 4 kann der Sicherheitsgurt 30 gemäß einer Modifikation des vorliegenden Ausführungsbeispiels ebenfalls schräg zu der Außenkante K des Fahrzeugsitzes 10 aus der ersten Schlitzöffnung 22 herausgeführt sein. Das heißt, der Sicherheitsgurt 30 ist schräg zu der schräg angeordneten ersten Schlitzöffnung 22 durch die erste Schlitzöffnung 22 geführt. Schräg bedeutet in diesem Zusammenhang ein Winkel ungleich 90° bzw. ein Winkel α bis zu ca. 70° und bevorzugt bis ca. 50° zwischen erster Schlitzöffnung 22 und Sicherheitsgurt 30.

Wie in Fig. 5 gezeigt, ist der Sicherheitsgurt 30 hinter der Blende 21 an seinem ersten Ende 33 befestigt. In diesem Fall ist also die Rolle zum Aufwickeln des Sicherheitsgurts 30 im unteren Bereich 12a der Rückenlehne 12 angeordnet. Auf diese Weise kann der Fahrzeugsitzabschnitt 20 auch einen sehr flachen Aufbau haben, was insbesondere von Vorteil ist, wenn die in Tiefe der Rückenlehne 12 des Fahrzeugsitzes 10 nicht sehr groß ist.

Die Schwenkachse des Schenkelements 25, die in Fig. 4 und Fig. 5 mit dem Buchstaben A bezeichnet ist, ist im Wesentlichen senkrecht zu der zweiten Schlitzöffnung 23 angeordnet, so dass die Schwenkachse A des Schenkelements 25 durch die zweite Schlitzöffnung 23 ragen kann. Das Schwenkelement 25 ist an der Schwenkachse A mit dem Sicherheitsgurt-Höhenverstellungselement 24 verbunden, so dass das Schwenkelement 25 um die Schwenkachse A geschwenkt werden kann. Die Schwenkachse A ist senkrecht zu dem geraden Gurtringabschnitt 25a angeordnet und von ihm beabstandet. Die Schwenkachse A ist zudem in Bezug auf die Abmessungen des ovalen Gurtrings des Schwenkelements 25 mittig zu der Länge des geraden Gurtringabschnitts 25a angeordnet. Das heißt, das Schwenkelement 25 ist achssymmetrisch zu der Schwenkachse A ausgestaltet.

Durch diese Art der Anordnung des Sicherheitsgurts 30 in der ersten Schlitzöffnung 22 und in dem Schwenkelement 25 kann der Sicherheitsgurt 30 von der Richtung, in der er aus der ersten Schlitzöffnung 22 auf den Fahrzeugsitzabschnitt 20 herausgeführt wird, in eine andere Richtung umgelenkt werden, wie es von dem Benutzer des Fahrzeugsitzes 10 gewünscht und für ihn erforderlich ist. Der Sicherheitsgurt 30 kann mit dem in Fig. 2 bis Fig. 5 dargestellten Schwenkelement 25 um bis zu ca. 180° um die Schwenkachse A geschwenkt werden.

Durch die Schrägstellung des Sicherheitsgurts 30 zu der Außenkante K des Fahrzeugsitzes 10, wie in Fig. 4 gezeigt, kann der Schwenkbereich von 180° des Schwenkelements 25 um die Schwenkachse A mehr in Richtung eines Benutzers gerichtet werden, der auf dem Fahrzeugsitz 10 Platz nehmen kann. Daher kann mit der Modifikation des zuvor dargestellten Ausführungsbeispiels des Fahrzeugsitzes mit höhenverstellbarem Sicherheitsgurt gegenüber dem Stand der Technik von Fig. 6 noch eine weitere Höhenanpassung des Sicherheitsgurtes 30 an die verschiedenen Körpergrößen des Benutzers des Fahrzeugsitzes 10 erzielt werden, auch wenn der Abstand bzw. die Höhenverstellung HV zwischen der unteren Endstellung UE und der oberen Endstellung OE des Sicherheitsgurt-Höhenverstellungselements 24 in der zweiten Schlitzöffnung 23 gleich dem Abstand ist, wie er bei einer Höhenverstellung gemäß dem Stand der Technik von Fig. 6 gezeigt ist. Daher ist der Sicherheitsgurt 30 gemäß der genannten Modifikation noch ergonomischer für den Benutzer des Fahrzeugsitzes 10 angeordnet.

Demzufolge ist bei einem geringeren Platzbedarf für die Höhenverstellung HV des Sicherheitsgurts 30 an dem Fahrzeugsitz 10 durch die spezielle Ausgestaltung derselben mit der zweiten Schlitzöffnung 23 und dem Schwenkelement 25 auch noch der Sitzkomfort und die Fahrsicherheit eines auf dem Fahrzeugsitz 10 sitzenden Fahrzeuginsassen unabhängig von seiner Körpergröße verbessert.

Zudem ist aufgrund der Schrägstellung der ersten Blende 21 und der ersten Schlitzöffnung 22 ein besonders platzsparender und gleichzeitig gut handhabbarer und wartungsfreundlicher Höhenverstellmechanismus für den Sicherheitsgurt 30 des Fahrzeugsitzes 10 gewährleistet.

### (Allgemeines)

Es sind insbesondere folgende Modifikationen denkbar.

Auch wenn der Fahrzeugsitz 10 zuvor als gepolsterter Fahrzeugsitz beschrieben wurde muss der Fahrzeugsitz 10 nicht gepolstert sein.

Der Fahrzeugsitzabschnitt 20, das Sicherheitsgurt-Höhenverstellelement 24 und das Schwenkelement 25 können aus Kunststoff gefertigt sein. Es ist aber auch eine Ausführung der Elemente mit einem Metall denkbar. In beiden Fällen können die Elemente mit einem Leder und/oder Stoffüberzug bezogen bzw. bedeckt sein.

Das Sicherheitsgurt-Höhenverstellungselement 24 ist in Fig. 2 und Fig. 3 jeweils als vieleckiger Körper dargestellt. Die Form des Sicherheitsgurt-Höhenverstellungselements 24 ist jedoch nicht auf die in Fig. 2 und Fig. 3 gezeigte Form beschränkt sondern ist insoweit beliebig als es die zuvor beschriebene Funktion des Sicherheitsgurt-Höhenverstellungselements 24 erfüllt. Das gleiche gilt auch für die Form des Schwenkelements 25, soweit mit seiner Form die zuvor beschriebene Funktion des Schwenkelements 25 erfüllt werden kann.

### Bezugszeichenliste

- 10: Fahrzeugsitz
- 11: Sitz
- 12: Rückenlehne
- 12a: unterer Bereich der Rückenlehne 12
- 20: Fahrzeugsitzabschnitt
- 21: Blende
- 22: Erste Schlitzöffnung
- 23: Zweite Schlitzöffnung
- 24: Sicherheitsgurt-Höhenverstellelement
- 25: Schwenkelement
- 25a: gerader Gurtringabschnitt
- 25b: Schwenkelementöffnung
- 26: Schiebeelement
- 30: Sicherheitsgurt
- 31: Sicherheitsgurtsteckeinrichtung
- 32: Sicherheitsgurtsteckbuchse
- 33: erstes Ende des Sicherheitsgurts 30
- 100: Fahrzeugsitzes
- 110: Fahrzeugsitzabschnitt
- 120: Sicherheitsgurt
- 130: Erste Öffnung
- 140: Abdeckung
- 150: Griff
- 160: Zweite Öffnung
- 170: Freiraum
- 180: Freiraum
- α: Winkel
- A: Schwenkachse
- HV: Höhenverstellung
- K: Außenkante des Fahrzeugsitzes 10
- UE: Untere Endstellung
- OE: Obere Endstellung

## Patentansprüche

1. Fahrzeugsitz (10) mit einem höhenverstellbaren Sicherheitsgurt (30) zur Sicherung eines Benutzers des Fahrzeugsitzes (10),
wobei der Fahrzeugsitz (10) einen Fahrzeugsitzabschnitt (20) zur Aufnahme eines ersten Endes (33) des Sicherheitsgurts (30) umfasst,
wobei der Fahrzeugsitzabschnitt (20) aufweist:
eine auf den Fahrzeugsitzabschnitt (20) aufgesetzte Blende (21), die den Fahrzeugsitzabschnitt (20) zum Fahrzeugsitz (10) hin abschließt, und hinter welcher eine erste Schlitzöffnung (22) zur Durchführung des Sicherheitsgurts (30) aus dem Inneren des Fahrzeugsitzabschnitts (20) zu dem Äußeren des Fahrzeugsitzabschnitts (20) angeordnet ist, wobei eine Ebene, in welcher die Öffnung der ersten Schlitzöffnung (22) angeordnet ist, senkrecht zu einer Ebene ist, in welcher sich der Fahrzeugsitzabschnitt (20) erstreckt, und
eine zweite Schlitzöffnung (23) zur Führung eines Sicherheitsgurt-Höhenverstellungselements (24) auf dem Fahrzeugsitzabschnitt (20) zwischen einer oberen Endstellung (OE) des Sicherheitsgurts (30) und einer unteren Endstellung (UE) des Sicherheitsgurts (30), und
wobei die Blende (21) zu einer Außenkante (K) des Fahrzeugsitzes (10) hin schräg nach unten abfällt, bei welcher der Fahrzeugsitzabschnitt (20) vorhanden ist.

2. Fahrzeugsitz nach Anspruch 1, wobei die erste Schlitzöffnung (22) schräg zu der zweiten Schlitzöffnung (23) angeordnet ist.

3. Fahrzeugsitz nach einem der vorangehenden Ansprüche, wobei der Sicherheitsgurt (30) schräg zu der Außenkante (K) des Fahrzeugsitzes (10) aus der ersten Schlitzöffnung (22) herausgeführt ist.

4. Fahrzeugsitz nach einem der vorangehenden Ansprüche, wobei der Fahrzeugsitzabschnitt (20) zudem ein mit dem Sicherheitsgurt-Höhenverstellungselement (24) verbundenes Schwenkelement (25) zum Schwenken eines von dem Schwenkelement (25) zu dem zweiten Ende des Sicherheitsgurts (30) führenden Teils des Sicherheitsgurts (30) um eine zur Schlitzlänge der zweiten Schlitzöffnung (23) senkrechte Schwenkachse (A) aufweist.

5. Fahrzeugsitz nach Anspruch 4, wobei das Schwenkelement (25) eine Schwenkelementöffnung (25b) aufweist, durch welche der Sicherheitsgurt (30) geführt ist und welche ein gerade geformtes Öffnungselement (25a) hat, über welches der Sicherheitsgurt (30) gleiten kann.

6. Fahrzeugsitz nach Anspruch 5, wobei das Schwenkelement (25) an dem Sicherheitsgurt-Höhenverstellungselement (24) mittels der Schwenkachse (A) schwenkbar gelagert ist, die von dem gerade geformten Öffnungselement (15a) beabstandet und senkrecht zu diesem angeordnet ist.

7. Fahrzeugsitz nach einem der Ansprüche 4bis 6, wobei das Schwenkelement (25) eine zu der Schwenkachse (A) achssymmetrische Form hat.

8. Fahrzeugsitz nach einem der Ansprüche 4 bis 7, wobei das Schwenkeiement (25) um bis zu 180° um die Schwenkachse (A) schwenkbar ist.

9. Fahrzeugsitz nach einem der vorangehenden Ansprüche, wobei das Sicherheitsgurt-Höhenverstellungselement (24) an einem Schiebeelement (26) befestigt ist, welches breiter als die Schlitzbreite der zweiten Schlitzöffnung (23) ist und zum Schieben des Sicherheitsgurt-Höhenverstellungselements (24) entlang der zweiten Schlitzöffnung (23) dient.

10. Fahrzeugsitz nach Anspruch 9 bei Abhängigkeit von einem der Ansprüche 5 bis 8, wobei das Sicherheitsgurt-Höhenverstellungselement (24) an der Schwenkachse (A) des Schwenkelements (25) an dem Schiebeelement (26) befestigt ist.

11. Fahrzeugsitz nach Anspruch 9 oder 10, wobei das Sicherheitsgurt-Höhenverstellungselement (24) außen an dem Fahrzeugsitzabschnitt (20) und das Schiebeelement (26) innen in dem Fahrzeugsitzabschnitt (20) geführt sind.

12. Fahrzeugsitz nach einem der vorangehenden Ansprüche, wobei die obere Endstellung (OE) des Sicherheitsgurts (30) und die untere Endstellung (UE) des Sicherheitsgurts (30) um 40 bis 80 mm voneinander beabstandet sind.

## Claims

1. A vehicle seat (10) with a vertically adjustable seat belt (30) in order to secure a user of the vehicle seat (10),
wherein the vehicle seat (10) comprises a vehicle seat portion (20) for receiving a first end (33) of the seat belt (30),
wherein the vehicle seat portion (20) comprises a cover (21) which is attached to the vehicle seat portion (20) and which covers the vehicle seat portion (20) towards the vehicle seat (10) and behind which a first slot opening (22) is provided for passing the seat belt (30) out of the interior of the vehicle seat portion (20) towards the exterior of the vehicle seat portion (20), wherein a plane on which the first slot opening (22) is arranged is perpendicular to a plane on which the vehicle seat portion (20) extends,
and a second slot opening (23) for guiding a seat-belt vertical adjustment element (24) on the vehicle seat portion (20) between an upper end position (OE) of the seat belt (30) and a lower end position (UE) of the seat belt (30),
and wherein the cover (21) descends obliquely downwards to an outer edge (K) of the vehicle seat (10), at which edge (K) the vehicle seat portion (20) is present.

2. A vehicle seat according to claim 1, wherein the first slot opening (22) is arranged obliquely with respect to the second slot opening (23).

3. A vehicle seat according to any one of the preceding claims, wherein the seat belt (30) is guided out of the first slot opening (22) obliquely to the outer edge (K) of the vehicle seat (10).

4. A vehicle seat according to any one of the preceding claims, wherein the vehicle seat portion (20) additionally has a pivoting element (25) connected to the seat-belt vertical adjustment element (24) for pivoting part of the seat belt (30) - leading from the pivoting element (25) to the second end of the seat belt (30) - about a pivot axle (A) at a right angle to the length of the second slot opening (23).

5. A vehicle seat according to claim 4, wherein the pivoting element (25) has a pivoting-element opening (25b) through which the seat belt (30) is guided and which has an opening element (25a) which is shaped in a straight manner and over which the seat belt (30) can slide.

6. A vehicle seat according to claim 5, wherein the pivoting element (25) is mounted so as to be pivotable on the seat-belt vertical adjustment element (24) by means of the pivot axle (A) which is arranged at a distance from the opening element (15a) shaped in a straight manner and at a right angle to the latter.

7. A vehicle seat according to any one of claims 4 to 6, wherein the pivoting element (25) has a shape axially symmetrical with respect to the pivot axle (A).

8. A vehicle seat according to any one of claims 4 to 7, wherein the pivoting element (25) is pivotable up to 180°C about the pivot axle (A).

9. A vehicle seat according to any one of the preceding claims, wherein the seat-belt vertical adjustment element (24) is fastened to a sliding element (26) which is wider than the width of the second slot opening (23) and which is used for moving the seat-belt vertical adjustment element (24) along the second slot opening (23).

10. A vehicle seat according to claim 9 in dependence upon any one of claims 5 to 8, wherein the seat-belt vertical adjustment element (24) is fastened on the pivot axle (A) of the pivoting element (25) on the sliding element (26).

11. A vehicle seat according to claim 9 or 10, wherein the seat-belt vertical adjustment element (24) is guided on the outside on the vehicle seat portion (20) and the sliding element (26) is guided on the inside on the vehicle seat portion (20).

12. A vehicle seat according to any one of the preceding claims, wherein the upper end position (OE) of the seat belt (30) and the lower end position (UE) of the seat belt (30) are at a distance of from 40 to 80 mm from each other.

## Revendications

1. Siège de véhicule (10) avec une ceinture de sécurité (30) réglable en hauteur pour la sécurisation d'un utilisateur du siège de véhicule (10),
dans lequel le siège de véhicule (10) comprend une section de siège de véhicule (20) pour loger une première extrémité (33) de la ceinture de sécurité (30),
dans lequel la section de siège de véhicule (20) présente :
un écran (21), posé sur la section de siège de véhicule (20), qui termine la section de siège de véhicule (20) vers le siège du véhicule (10) et derrière lequel est agencé une première ouverture de fente (22) pour le passage de la ceinture de sécurité (30) de l'intérieur de la section de siège de véhicule (20) vers l'extérieur de la section de siège de véhicule (20), dans lequel un plan, dans lequel est agencé l'ouverture de la première ouverture de fente (22) est perpendiculaire à un plan dans lequel s'étend la section de siège de véhicule (20) et,
une seconde ouverture de fente (23) pour le guidage d'un élément de réglage en hauteur de la ceinture de sécurité (24) sur la section de siège de véhicule (20) entre une position d'extrémité supérieure (OE) de la ceinture de sécurité (30) et une position d'extrémité inférieure (UE) de la ceinture de sécurité (30), et
dans lequel l'écran (21) retombe en diagonale vers le bas vers un bord extérieur (K) du siège de véhicule (10), sur lequel se trouve la section de siège de véhicule (20).

2. Siège de véhicule selon la revendication 1, dans lequel la première ouverture de fente (22) est agencée de manière oblique par rapport à la seconde ouverture de fente (23).

3. Siège de véhicule selon l'une des revendications précédentes, dans lequel la ceinture de sécurité (30) est guidée hors de la première ouverture de fente (22) de manière oblique par rapport au bord extérieur (K) du siège de véhicule (10).

4. Siège de véhicule selon l'une des revendications précédentes, dans lequel la section de siège de véhicule (20) présente en outre un élément pivotant (25) relié à l'élément de réglage en hauteur de la ceinture de sécurité (24) pour le pivotement d'une partie de la ceinture de sécurité (30) menant depuis l'élément pivotant (25) jusqu'à la seconde extrémité de la ceinture de sécurité (30) autour d'un axe de pivotement (A) perpendiculaire à la longueur de la seconde ouverture de fente (23).

5. Siège de véhicule selon la revendication 4, dans lequel l'élément pivotant (25) présente une ouverture d'élément pivotant (25b) à travers laquelle la ceinture de sécurité (30) est guidée et qui présente un élément d'ouverture de forme droite (25a), sur lequel la ceinture de sécurité (30) peut glisser.

6. Siège de véhicule selon la revendication 5, dans lequel l'élément pivotant (25) est logé de manière pivotante au niveau de l'élément de réglage en hauteur de la ceinture de sécurité (24) au moyen de l'axe de pivotement (A) qui est agencé à une certaine distance de l'élément d'ouverture de forme droite (15a) et de manière perpendiculaire à celui-ci.

7. Siège de véhicule selon l'une des revendications 4 à 6, dans lequel l'élément pivotant (25) a une forme symétrique par rapport à l'axe de pivotement (A).

8. Siège de véhicule selon l'une des revendications 4 à 7, dans lequel l'élément pivotant (25) est pivotant jusqu'à 180° autour de l'axe de pivotement (A).

9. Siège de véhicule selon l'une des revendications précédentes, dans lequel l'élément de réglage en hauteur de la ceinture de sécurité (24) est fixé contre un élément coulissant (26) qui est plus large que la largeur de la seconde ouverture de fente (23) et qui sert à faire coulisser l'élément de réglage en hauteur de la ceinture de sécurité (24) le long de la seconde ouverture de fente (23).

10. Siège de véhicule selon la revendication 9, en lien avec une des revendications 5 à 8, dans lequel l'élément de réglage en hauteur de la ceinture de sécurité (24) contre l'axe de pivotement (A) de l'élément pivotant (25) est fixé contre l'élément coulissant (26).

11. Siège de véhicule selon la revendication 9 ou 10, dans lequel l'élément de réglage en hauteur de la ceinture de sécurité (24) est guidé à l'extérieur de la section de siège de véhicule (20) et l'élément coulissant (26) est guidé à l'intérieur de la section de siège de véhicule (20).

12. Siège de véhicule selon l'une des revendications précédentes, dans lequel la position d'extrémité supérieure (OE) de la ceinture de sécurité (30) et la position d'extrémité inférieure (UE) de la ceinture de sécurité (30) sont distancées l'une de l'autre de 40 à 80 mm.
